Europäisches Patentamt

European Patent Office

Office européen des brevets

(11) Veröffentlichungsnummer: **0 595 254 A1**

## (12) EUROPÄISCHE PATENTANMELDUNG

(21) Anmeldenummer: **93117310.8**

(22) Anmeldetag: **26.10.93**

(51) Int. Cl.5: **B23K 35/02**, B23K 35/30, B23K 35/00, B23K 31/02

(30) Priorität: **28.10.92 DE 4236383**
**04.10.93 DE 4333798**

(43) Veröffentlichungstag der Anmeldung:
**04.05.94 Patentblatt 94/18**

(84) Benannte Vertragsstaaten:
**AT BE CH DE DK ES FR GB GR IE IT LI LU MC NL PT SE**

(71) Anmelder: **DEGUSSA AG**
**Weissfrauenstrasse 9**
**D-60311 Frankfurt(DE)**

(72) Erfinder: **Weise, Wolfgang, Dr. Dipl.-Ing.**
**Eckenheimer Landstrasse 146**
**D-60318 Frankfurt(DE)**
Erfinder: **Krappitz, Harald, Dr. Dipl.-Ing.**
**Greifenhagenstrasse 12 a**
**D-63457 Hanau 9(DE)**
Erfinder: **Malikowski, Willi**
**Brentanoplatz 11**
**D-63739 Aschaffenburg(DE)**

(54) **Verfahren zum Auflöten von Hartstoffen auf Stähle.**

(57) Beim Auflöten von Hartstoffteilen auf Stahlunterlagen entstehen thermische Spannungen zwischen Hartstoff und Stahl. Diese lassen sich abbauen durch die Verwendung eines Mehrschichtenlots, bei dem die Mittelschicht aus einer aushärtbaren Kupfer- oder Nickellegierung besteht, die beidseitig mit einer Schicht aus einer Hartlotlegierung versehen ist, deren Arbeitstemperatur wenigstens 50 °C unterhalb des Schmelzpunktes der aushärtbaren Kupfer-oder Nickellegierung liegt. Nach dem Löten wird eine Temperaturbehandlung bei 250 bis 550° C durchgeführt, um eine Ausscheidungshärtung der Mittelschicht zu erreichen.

Die Erfindung betrifft ein Verfahren zum Auflöten Von Hartstoffen auf Grundkörper aus Stahl bei Temperaturen oberhalb 570° C unter Verwendung eines Dreischichtenlosts, bei dem die Mittelschicht aus einer Kupfer- oder Nickellegierung besteht und beiderseits mit einer Schicht aus einem Hartlot versehen ist, dessen Arbeitstemperatur wenigstens um 50° C unterhalb des Schmelzpunktes der Kupfer- oder Nickellegierung der Mittelschicht liegt.

Hartstoffe, insbesondere Hartmetalle und Cermets werden im großen Umfang in der Schneidtechnik zum Bearbeiten von Holz, Stahl und Gestein eingesetzt. Dazu ist es erforderlich, die Hartstoffteile mit einem Grundkörper aus Stahl zu verbinden. Dies erfolgt in der Regel durch Klemm- oder Schraubverbindungen oder vorzugsweise durch Löten.

Beim Einsatz dieser Bearbeitungswerkzeuge treten in der Verbindungszone zwischen Hartmetallteil und Grundkörper hohe und komplexe Beanspruchungen auf, wie Druck-, Zug- und Scherspannungen. Außerdem entstehen beim Löten durch die unterschiedlichen Wärmeausdehnungskoeffizienten von Hartstoff und Stahl beim Abkühlen beträchtliche Spannungen, die durch duktil bleibende Lote ausgeglichen werden können. Solche duktilen Lote, wie beispielsweise CuMnNi-, CuMnCo-, CuMnSi- und AgCuZnMnNi-Legierungen, besitzen mechanische Fertigkeiten, die für viele Anwendungen ausreichend hoch sind. Für extreme Anwendungsfälle, wie sie häufig in der Schneidtechnik auftreten können, werden Lote mit höheren Festigkeiten gefordert.

In der DE-OS 40 36 777 werden ausscheidungshärtbare Lote, wie CuNiSi-, CuBe-, CuZr- oder CuTi-Legierungen, zum Verbinden von Hartmetallteilen mit Grundkörpern aus Stahl verwendet. Diese Lote besitzen eine hohe Duktilität nach dem Abkühlen und erreichen eine hohe mechanische Festigkeit nach dem Aushärten durch eine Anlasserwärmung.

Ein Nachteil dieses Verfahrens besteht jedoch darin, daß aufgrund des hohen Schmelzpunktes dieser ausscheidungshärtbaren Kupfer-Legierungen hohe thermische Spannungen in dem Verbund Hartmetall und Stahl entstehen. Dies kann insbesondere bei Hartmetallen mit geringem Kobalt-Bindeanteil zum Versagen des Bauteils führen.

In der Löttechnik sind Mehrschichtenlote bekannt. Sie dienen beispielsweise dazu, spröde, an sich nichtverformbare Lötteile herzustellen, indem man die duktilen Lotkomponenten aufeinanderplattiert und entsprechende Lotformteile herstellt. Die eigentliche Lotlegierung entsteht erst beim Aufschmelzen des Schichtlotes.

Aus der EP-PS 677 012 ist ein Dreischichtenlot bekannt, bestehend aus einer Zwischenschicht aus Stahl, Kupfer oder Kupfer-Nickellegierung, auf die beidseitig eine Lotschicht aufplattiert ist. Die Zwischenschicht bleibt beim Lötvorgang fest und hat die Aufgabe die Lotbindung zu verstärken, um thermische Spannungen aufzunehmen. Dieses Lot wird auch für Hartmetallwerkzeuge verwendet, besitzt aber noch keine optimalen Festigkeitswerte.

Auch in der US-PS 3,676,088 werden Mehrschichtenlote beschrieben, wobei die Zwischenschicht aus einer Kupferlegierung besteht. Diese Lote dienen als Ersatz für die spröden Kupfer-Phosphorlote und dienen nicht zum Auflöten von Hartmetallen auf Stahl.

Zum Auflöten von Hartmetallen auf Stahl dient ein Mehrschichtenlot gemäß DE-PS 863737, bestehend aus einer Zwischenschicht aus Kupfer oder Nickel, beidseitig plattiert mit einem Silberlot. Nach dem Löten erfolgt noch eine Wärmebehandlung, um eine weitere Diffusion zwischen dem Silber und dem Metall der Zwischenschicht zu erreichen. Hohe Härtewerte können daher nicht erreicht werden.

Es war Aufgabe der vorliegenden Erfindung, ein Verfahren zum Auflöten von Hartstoffen auf Grundkörper aus Stahl bei Temperaturen oberhalb 570° C unter Verwendung eines Dreischichtenlotes zu entwickeln, bei dem die Mittelschicht aus einer Kupfer- oder Nickellegierung besteht und beiderseits mit einer Schicht aus einem Hartlot versehen ist, dessen Arbeitstemperatur wenigstens 50° C unterhalb des Schmelzpunktes der Kupfer- oder Nickellegierung der Mittelschicht liegt.

Mit diesem Verfahren sollte nicht nur die hohe mechanische Festigkeit einer aushärtbaren Lotlegierung, sondern auch eine Reduzierung der thermischen Spannungen des Hartstoff/Stahl-Verbundes erreicht werden.

Diese Aufgabe wird erfindungsgemäß dadurch gelöst, daß als Mittelschicht eine aushärtbare Kupfer- oder Nickelschicht verwendet wird, daß durch die Wahl der Arbeitstemperatur und der Legierung beim Auflöten ein Aufschmelzen der Zwischenschicht verhindert wird, und daß nach dem Löten eine Temperaturbehandlung bei 250 bis 550° C zur Ausscheidungshärtung der Mittelschicht angeschlossen wird.

Es wird also eine an sich bekannte aushärtbare Kupfer-Legierung oder Nickel-Legierung als Mittelschicht eines Mehrschichtenlotes verwendet. An diese Mittelschicht wird auf beiden Seiten ein an sich bekanntes Hartlot anplattiert, wobei die Arbeitstemperatur des anplattierten Lotes wenigstens um 50 °C unterhalb der Schmelztemperatur der ausscheidungshärtbaren Mittelschicht liegen muß. Da durch die Wahl der Arbeitstemperatur und der Legierung die Mittelschicht während des Lötvorganges nicht aufschmilzt, kann die Ausbildung einer dickeren Lotschicht erreicht werden, die die thermischen Spannungen zwischen dem Grundkörper und dem Hartstoffteil deutlich reduziert.

Der wesentliche Vorteil des erfindungsgemäßen Verfahrens unter Verwendung eines Mehrschichtenlotes mit einer aushärtbaren Mittelschicht besteht darin, daß beim Lötprozeß, der praktisch einem Lösungsglühen der aushärtbaren Zwischenschicht entspricht, die hohe Duktiltät der Zwischenschicht während der gesamten Abkühlphase erhalten bleibt.

Da die thermischen Spannungen vor allem beim Abkühlen entstehen, kann die im lösungsgeglühten Zustand vorliegende Mittelschicht die thermischen Spannungen zu einem großen Teil abbauen. Beim Abkühlen ist lediglich darauf zu achten, daß die Abkühlung so schnell erfolgt, daß keine Ausscheidungen auftreten.

Die aushärtbare Lot-Mittelschicht bietet nun die Möglichkeit, durch eine dem Lötprozeß nachgeschaltete Ausscheidungserwärmung die mechanische Festigkeit der Lötverbindung zu erhöhen ohne die thermischen Spannungen wesentlich zu erhöhen. Mit den erfindungsgemäßen Lötverfahren kann daher eine hochfeste und gleichzeitig spannungsarme Lötverbindung hergestellt werden.

Als Mittelschichten werden vorzugsweise solche aushärtbaren Kupfer- und Nickellegierungen ausgewählt, deren Schmelzpunkt weit über der Arbeitstemperatur des verwendeten, anplattierten Lotes liegt, und die Anlaßtemperaturen im Bereich von 250 - 550 °C aufweisen.

Vorteilhafterweise verwendet man für die Mittelschicht des Mehrschichtenlotes Kupferlegierungen mit Beimengungen eines oder mehrerer der Metalle oder Elemente Indium, Chrom, Beryllium, Nickel, Magnesium, Scandium, Silizium, Zinn, Titan, Zirkonium, Hafnium und Mangan bzw. Nickellegierungen mit Beimengungen eines oder mehrerer der Metalle Aluminium, Kupfer, Titan und Beryllium.

Bewährt haben sich als aushärtbare Lotmittelschichten folgende Kupferlegierungen:

Cu mit 15 bis 25 Gew.-% Mn und 15 bis 25 Gew.-% Ni

Cu mit 7 bis 8,5 Gew.-% Mn und 2 bis 3 Gew.-% Si

Cu mit 0,4 bis 2 Gew.-% Cr

Cu mit 0,4 bis 1 Gew.-% Hf und 0,3 bis 0,5 Gew.-% Zr

Cu mit 0,1 bis 0,4 Gew-% Zr

Cu mit 0,5 bis 2 Gew.-% Ti

Cu mit 6 bis 10 Gew.-% Ni und 6 bis 10 Gew.-% Sn

Cu mit 1 bis 2 Gew.-% Ti, 2 bis 3 Gew.-% Si und 0,3 bis 0,8 Gew.-% Cr

Cu mit 0,5 bis 20 Gew.-% In

Cu mit 1 bis 4 Gew.-% Be

Cu mit 1 bis 3 Gew.-% Ni und 0,4 bis 0,8 Gew.-% Si bzw. Nickellegierungen

Ni mit 2 bis 6 Gew.-% Al und 1 bis 2 Gew.-% Titan

Ni mit 20 bis 40 Gew.-% Cu und 2 bis 4 Gew.-% Al

Ni mit 1 bis 3 Gew.-% Be.

Besonders bewährt haben sich Cu mit 20 % Mn und 20 % Ni, Cu mit 7,65 Mn und 2,35 % Si, Cu mit 1 % Ti, Cu mit 2 % Ni und 0,6 % Si, Ni mit 4 % Al und 11,5 % Ti, Cu mit 0,6 % Cr, Cu mit 0,2 % Zr und Cu mit 0,66 % Hf und 0,04 % Zr.

Als anplattierbare Lotschichten haben sich folgende Lotzusammensetzungen bewährt:

Ag mit 25 bis 34 Gew.-% Cu, 18 bis 25 Gew.-% Zn, 1 bis 5 Gew.-% Mn und 0,3 bis 1 Gew.-% Ni mit einer Arbeitstemperatur von 650 bis 700 °C, Ag mit 20 bis 35 Gew.-% Cu, 4 bis 8 Gew.-% In, 1 bis 3 Gew.-% Ni und 1 bis 3 Gew.-% Mn mit Arbeitstemperaturen von 710 bis 800 °C, Cu mit 15 bis 20 Gew-.% Ag, 20 bis 30 Gew.-% Zn, 15 bis 20 Gew.-% Cd, 2 bis 3 Gew.-% Mn und 0,3 bis 0,7 Gew-% Ni mit Arbeitstemperaturen von 570 bis 780 °C Cu mit 10 bis 15 Gew.-% Mn und 1 bis 4 Gew.-% Ni mit Arbeitstemperaturen zwischen 950 und 1000 °C.

Das Lot der anplattierten Schicht und die aushärtbare Legierung der Mittelschicht müssen stets so gewählt und kombiniert werden, daß zwischen der Arbeitstemperatur des Lotes und der Schmelztemperatur der Zwischenschicht ein Temperaturunterschied von wenigstens 50 °C liegt.

Die folgende Tabelle zeigt Beispiele von geeigneten Mehrschichtenloten mit Angaben der Arbeitstemperatur, Auslagerungstemperatur und erreichte Scherfestigkeit der Lotschicht.

| Lot (Gew.-%) | Arbeits-temperatur (°C) | Zwischenschicht | | Auslagerung | Scherfe-stigkeit |
| --- | --- | --- | --- | --- | --- |
| | | Zusammen-setzung (Gew.-%) | Schmelz-punkt (°C) | | |
| Ag 27,5Cu 20,5Zn 2,5Mn 0,5Ni | 690 | Cu 20Mn 20Ni | 1045 | 370 °C/4 h | 200 - 350 |
| Ag 27,5Cu 20,5Zn 2,5Mn 0,5Ni | 690 | Cu 7,65Mn 2,35Si | 990 | 400 °C/1 h | 200 - 350 |
| Ag 27,5Cu 20,5Zn 2,5Mn 0,5Ni | 690 | Cu 0,6Cr | 1080 | 550 °C/10 h | 200 - 300 |
| Ag 26Cu 6In 2Ni 2Mn | 770 | Cu 0,66Hf 0,04Zr | 1085 | 550 °C/1 h | 200 - 300 |
| Ag 26Cu 6In 2Ni 2Mn | 770 | Cu 0,2Zr | 1080 | 500 °C/1 h | 200 - 300 |
| Ag 26Cu 6In 2Ni 2Mn | 770 | Cu 1Ti | 1080 | 450 °C/1 h | 200 - 300 |
| Cu 27Ag 20Zn 9,5Mn 5,5Ni | 840 | Cu 7,5Ni 8Sn | 1090 | 370 °C/4 h | 200 - 300 |
| Ag 27,5Cu 20,5Zn 2,5Mn 0,5Ni | 690 | Cu 15In | 820 | 320 °C/2,5 h | 200 - 300 |
| Ag 27,5Cu 20,5Zn 2,5Mn 0,5Ni | 690 | Cu 2Be | 890 | 325 °C/1 h | 250 - 350 |
| Ag 27,5Cu 20,5Zn 2,5Mn 0,5Ni | 690 | Cu 2Ni 0,6Si | 1095 | 500 °C/1 h | 200 - 350 |

## Patentansprüche

1. Verfahren zum Auflöten von Hartstoffen auf Grundkörper aus Stahl bei Temperaturen oberhalb 570° C unter Verwendung eines Dreischichtenlotes, bei dem die Mittelschicht aus einer Kupfer- oder Nickellegierung besteht und beiderseits mit einer Schicht aus einem Hartlot versehen ist, dessen Arbeitstemperatur wenigstens um 50 °C unterhalb des Schmelzpunktes der Kupfer- oder Nickellegierung der Mittelschicht liegt,

**dadurch gekennzeichnet**,

daß als Mittelschicht eine aushärtbare Kupfer- oder Nickellegierung verwendet wird, daß durch die Wahl der Arbeitstemperatur und der Legierung beim Auflöten ein Aufschmelzen der Mittelschicht verhindert wird, und daß nach dem Löten eine Temperaturbehandlung bei 250 bis 550° C zur Ausscheidungshärtung der Mittelschicht angeschlossen wird.

2. Verfahren zum Auflöten von Hartstoffen nach Anspruch 1,

**dadurch gekennzeichnet**,

daß als Mittelschicht aushärtbare Kupfer- und Nickellegierungen der Zusammensetzung Cu Mn20 Ni20, Cu Mn7,65 Si2,35, CuTi1, Cu Ni2 Si0,6, Ni A14 Ti1,5 Cu Cr 0,6, Cu Zr 0,2 und Cu Hf 0,66 Zr 0,04 eingesetzt werden.

<table>
<tr><td colspan="3" style="text-align:center"><strong>Europäisches Patentamt</strong></td><td style="text-align:center"><strong>EUROPÄISCHER RECHERCHENBERICHT</strong></td><td style="text-align:center"><strong>Nummer der Anmeldung</strong><br>EP 93 11 7310</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A,D | EP-A-0 487 447 (HILTI AG)<br>--- | | B23K35/02<br>B23K35/30<br>B23K35/00<br>B23K31/02 |
| A,D | DE-C-863 737 (FA. G. RAU)<br>--- | | |
| A | US-A-4 340 650 (S.PATTANAIK ET AL)<br>--- | | |
| A | PATENT ABSTRACTS OF JAPAN<br>vol. 12, no. 358 (C-531)26. September 1988<br>& JP-A-63 114 984 (NIKON CORP.) 19. Mai 1988<br>* Zusammenfassung *<br>--- | | |
| A | PATENT ABSTRACTS OF JAPAN<br>vol. 16, no. 471 (M-1318)30. September 1992<br>& JP-A-04 169 244 (FUJITSU) 17. Juni 1992<br>* Zusammenfassung *<br>----- | | |

| RECHERCHIERTE SACHGEBIETE (Int.Cl.5) |
|---|
| B23K |

Der vorliegende Recherchenbericht wurde für alle Patentansprüche erstellt

| Recherchenort | Abschlußdatum der Recherche | Prüfer |
|---|---|---|
| DEN HAAG | 18. Februar 1994 | Mollet, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)